**Europäisches Patentamt**

**European Patent Office**

**Office européen des brevets**

(19)

(11) Veröffentlichungsnummer: **0 168 577**
**B1**

# (12) EUROPÄISCHE PATENTSCHRIFT

(45) Veröffentlichungstag der Patentschrift:
09.03.88

(21) Anmeldenummer: **85105757.0**

(22) Anmeldetag: **10.05.85**

(51) Int. Cl.⁴: **G 03 B 15/00**

(54) **Vorrichtung zur Herstellung fotografischer Aufnahmen von Bildschirmbildern.**

(30) Priorität: **22.05.84 DE 3418960**

(43) Veröffentlichungstag der Anmeldung:
**22.01.86 Patentblatt 86/4**

(45) Bekanntmachung des Hinweises auf die Patenterteilung:
**09.03.88 Patentblatt 88/10**

(84) Benannte Vertragsstaaten:
**FR GB IT**

(56) Entgegenhaltungen:
**DE - A - 2 936 228**
**DE - A - 3 217 938**
**DE - A - 3 310 093**
**FR - A - 1 461 352**
**US - A - 4 285 587**
**US - A - 4 343 543**

(73) Patentinhaber: **Agfa-Gevaert AG, Patentabteilung,
D-5090 Leverkusen 1 (DE)**

(72) Erfinder: **Müller, Jürgen, Dipl.-Ing., Bozzarisstrasse 7,
D-8000 München 90 (DE)**
Erfinder: **Kröbel, Heinz, Dipl.-Ing., Ahornring 61,
D-8021 Taufkirchen (DE)**
Erfinder: **Reichart, Michael, Dipl.-Ing.,
Rothmundstrasse 8, D-8000 München (DE)**
Erfinder: **Schindlbeck, Günther, Ing.grad.,
Scharfreiterplatz 47, D-8000 München 90 (DE)**

## Beschreibung

Die Erfindung betrifft eine Vorrichtung zur Herstellung fotografischer Aufnahmen von auf einem Bildschirm eines Monitors erscheinenden Röntgen- oder Ultraschall- oder dergleichen Bildern, wobei ein Objektiv zwischen dem Bildschirm und einer einen Film in Belichtungsstellung haltenden Filmbühne zur scharfen Abbildung des Bildschirmbildes auf den Film angeordnet ist, wobei die Filmbühne in einer Koordinatenrichtung (Z) hin- und herverschiebbar gelagert und mit Antriebsmitteln für die Verschiebebewegung gekoppelt ist, wobei Filmtransportmittel zum Be- und Entladen der Filmbühne vorgesehen sind, wobei vorzugsweise der Bildschirm und das Objektiv schritt- oder stufenweise in der zur Verschieberichtung (Z) der Filmbühne und zur Objektivachse (Y) senkrechten Koordinatenrichtung (X) einstellbar bzw. antreibbar angeordnet sind und wobei die Filmbühne als Blattfilmbühne ausgebildet ist.

Eine Vorrichtung dieser Art ist bereits bekannt durch die US-PS 4 343 543 bzw. die dieser entsprechende DE-OS 3 122 487. Sollen in dieser bekannten Vorrichtung Blattfilme verwendet werden, so müssen sie in einem Filmhalter (Kassette) in der Kamera eingebracht werden, was einerseits die gesonderte Be- und Entladung des Filmhalters erfordert, andererseits aber auch die völlige Ausnutzung des verwendeten Filmformats unmöglich macht. Auch ist nicht erkennbar, wie bei dieser Vorrichtung unterschiedliche Formformate verwendbar sein sollen. Andererseits ist durch die DE-OS 3 217 938 eine andere Vorrichtung für Monitoraufnahmen bekannt, bei der mehrere Aufnahmen auf einem Blattfilm angeordnet werden können. Dabei wird der Film durch ein Transportwalzenpaar zur Filmbühne bewegt und durch eine verschiebbare Greifvorrichtung erfasst, die den völligen Transport des Films in die Bühne und wieder zurück zum Transportwalzenpaar übernimmt. Diese Greifvorrichtung ist aufwendig, zumal sie einen eigenen Antrieb und eine eigene Steuerung aufweisen muss.

Der Erfindung liegt demgegenüber die Aufgabe zugrunde, eine Vorrichtung der eingangs genannten Art so auszubilden, dass die Filmtransportmittel den Blattfilm völlig in die Filmbühne und wieder heraus transportieren können, ohne dass der Film über die Filmbühne übersteht bzw. grösser als die Filmbühne sein muss.

Diese Aufgabe wird erfindungsgemäss gelöst durch die Merkmale des Hauptanspruchs. Weitere vorteilhafte Merkmale der Erfindung sind den Unteransprüchen entnehmbar.

Dadurch, dass die Filmbühne in eine Be- und Entladestellung fahrbar ist, kann sie unmittelbar bis an die Transportwalzen zur Filmzu- und -abführung herangebracht werden. Durch die die nutzbare Filmfläche nicht wesentlich beeinflussenden Ausnehmungen an ihrem den Transportwalzenstücken zugewandten Rand können die Transportwalzenstücke den völlig in der Filmbühne liegenden Blattfilm dadurch bis zu seiner völligen Einführung in die Filmbühne oder zu seiner Entnahme halten bzw. erfassen, dass sie in der Be- und Entladestellung in die Ausnehmungen der Filmbühne eingreifen. Es sind also keine weiteren Filmtransportmittel innerhalb der Filmbühne erforderlich, noch braucht der Film grösser als die Bühnenfläche zu sein und kann somit praktisch in seiner ganzen Grösse für Aufnahmen ausgenutzt werden.

Die Erfindung wird anhand von Zeichnungen näher erläutert. Es zeigen:

Fig. 1 eine halbschematische Darstellung einer erfindungsgemässen Vorrichtung für die Bildschirmfotografie in einer der Stellungen für Planfilmaufnahmen,

Fig. 2 eine abgebrochene Darstellung der Vorrichtung nach Fig. 1 in der Stellung für fotografische Aufnahmen mittels einer Rollfilmkamera,

Fig. 3a bis 3h mögliche Formatkombinationen bei Reihenbildschirmaufnahmen auf jeweils einen Planfilm mittels der Vorrichtung nach Fig. 1,

Fig. 4 einen die Transportrollen für die Be- und Entladung der Planfilmbühne darstellenden Ausschnitt der Vorrichtung nach Fig. 1.

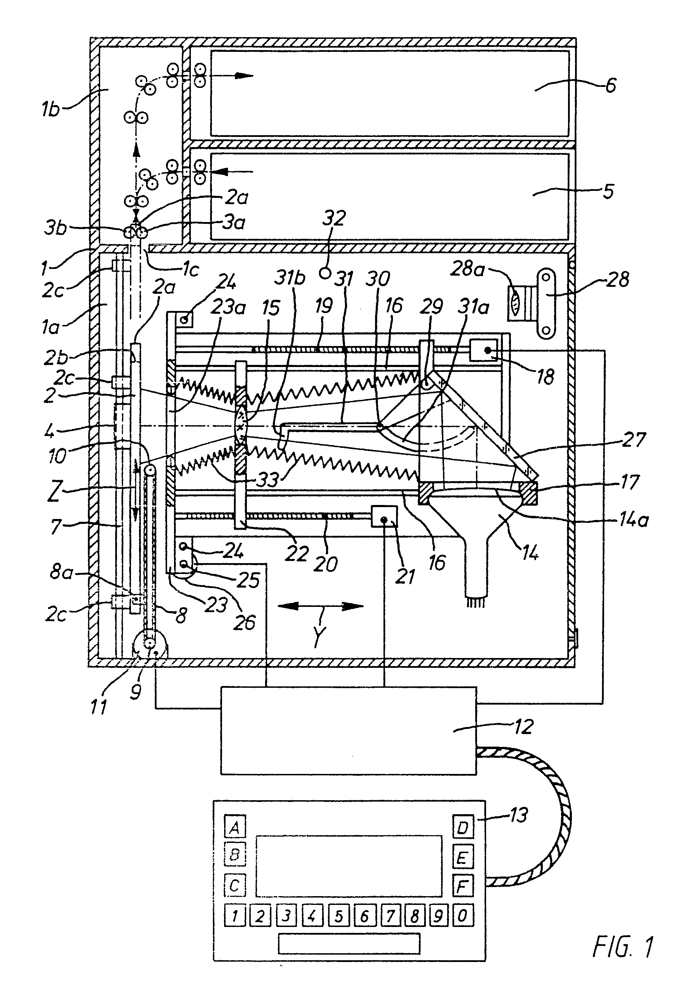

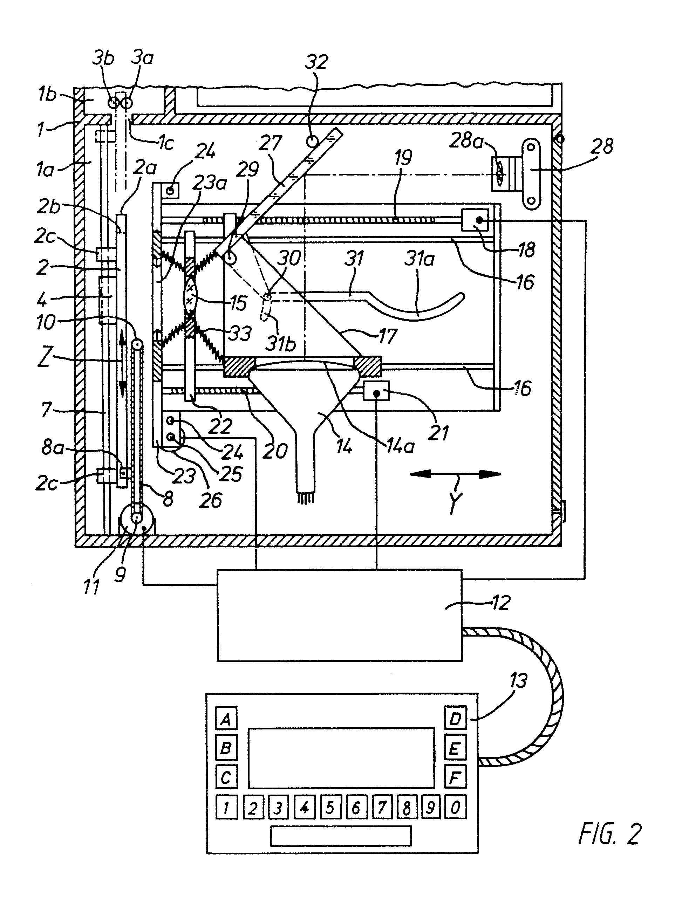

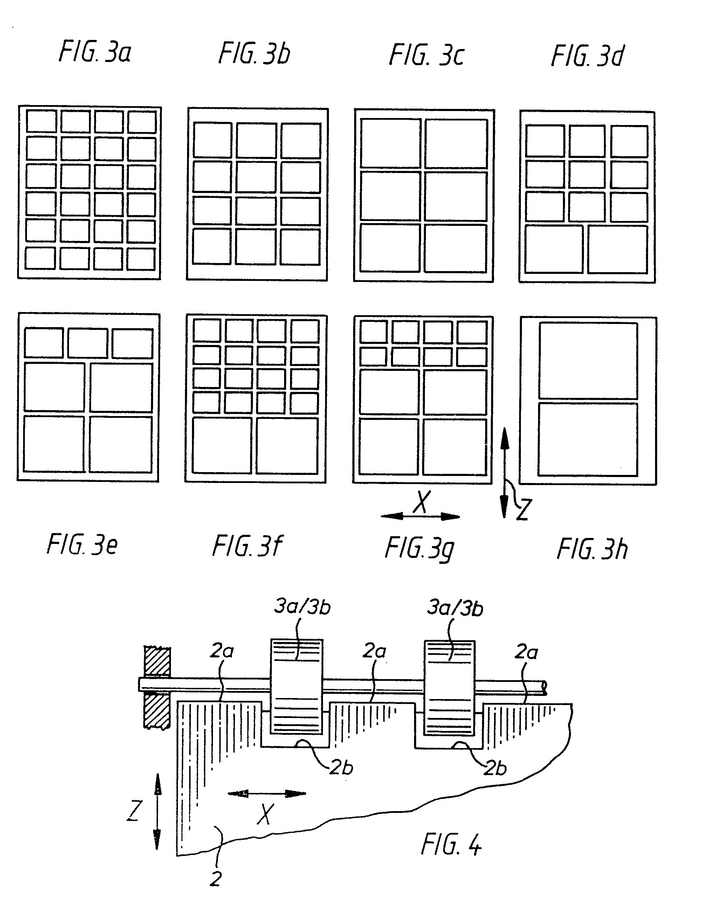

In den Fig. 1 und 2 sind ein schematisch dargestelltes Gerätegehäuse mit 1, dessen fotografischer Aufnahmeteil mit 1a und dessen Filmbe- und -entladeteil mit 1b und ein Durchtrittsschlitz zwischen dem Aufnahmeteil 1a und dem Filmbe- und -entladeteil 1b mit 1c bezeichnet. Der Durchtrittsschlitz 1c erstreckt sich in Richtung einer Koordinate, gemäss den Figuren in Richtung der X-Koordinate, entsprechend der Breite einer Filmbühne 2 und weist in der hierzu und zur Verschieberichtung Z der Filmbühne 2 senkrechten Richtung Y eine Breite auf, die ausreichend ist, dass die ihm zugewandte Oberkante 2a der Filmbühne 2 bis in den Bereich des Transportwalzenpaares 3a, 3b vom Aufnahmeteil 1a in den Be- und Entladeteil 1b hineingeschoben werden kann. Die Filmbühne 2 weist eine bekannte Ansaugeinrichtung 4 und nicht gezeigte, bekannte Ansauglöcher auf, durch die ein auf die Aufnahmeseite der Filmbühne 2 aufgebrachtes Filmblatt in der durch die vertikale Lage der Filmbühne 2 vorgegebenen vertikalen Stellung sicher gehalten werden kann. Die Oberkante der Filmbühne 2 weist, wie in Fig. 4 am deutlichsten sichtbar ist, in bestimmten Abständen Ausschnitte 2b auf, während die Transportwalzen 3a, 3b die bereits im Be- und Entladeteil 1b liegen, in mehrere Walzenpaarstücke 3a, 3b von etwas weniger als der Breite der Ausschnitte 2b aufgeteilt sind und an den Stellen in Richtung X liegen, an denen auch die Ausschnitte 2b liegen. Die Filmbühne 2 ist in später genauer zu beschreibender Weise in vertikaler Richtung nämlich in Z-Richtung, auf- und abwärts verschiebbar, wobei in ihrer obersten Be- und Entladestellung in ihre Ausschnitte 2b der untere Teil der Walzenpaarstücke 3a, 3b eingreift.

Im Be- und Entladeteil 1b sind in an sich bei Röntgenaufnahmegeräten oder Kassettenbe- und -entladegeräten bekannter Weise Einschübe 5 und 6 oder noch weitere Einschübe vorhanden, von denen mindestens der eine Einschub 5 ein Blattfilmvorratsmagazin mit Transportmitteln zum Transportieren eines Films zu den Walzenpaarstücken 3a, 3b enthält. Der zweite Einschub 5 kann ein Zwischenmagazin darstellen zum lichtdichten Einführen von belichtetem Film ebenfalls mittels der Walzenpaarstücke 3a, 3b. Genausogut kann aber auch als weiterer Teil im Anschluss an den Be- und Entladeteil 1b direkt eine Ent-

wicklungsmaschine vorgesehen sein. In bekannter Weise sind alle diese Vorrats- oder Zwischenmagazine und ggf. die Entwicklungsmaschine einerseits in ihrer Funktionsstellung lichtdicht ausgeführt. Da dies aber an sich bekannt und auf jede bekannte Weise ausführbar und für die vorliegende Erfindung nicht wesentlich ist, sind ohne Bezugsziffern in den Fig. 1 und 2 nur noch die vor bzw. nach den Walzenpaarstücken 3a, 3b vorgesehenen weiteren Transportwalzenpaare schematisch angedeutet. Zum Be- bzw. Entladen wird die Filmbühne 2 bis in ihre oberste, in Fig. 4 gezeigte bzw. in Fig. 1 strichpunktiert angedeutete Stellung bewegt, wobei dann zu entladender Film, der in den Ausschnitten 2b zugänglich liegt, unter Abschaltung der Ansaugvorrichtung 4 durch die Walzenpaarstücke 3a, 3b erfasst und dem Zwischenmagazin 6 bzw. der Entwicklungsmaschine zugeführt wird. Umgekehrt wird neu einzuführender Film dem Vorratsmagazin entnommen und wieder über die Walzenpaarstücke 3a, 3b der Filmbühne 2 zugeführt. Wenn er dort seine richtige Lage einnimmt, tritt die Ansaugvorrichtung wieder in Funktion, und die Filmbühne 2 wird in ihre Arbeitsstellung heruntergefahren.

Für die Lagerung der Filmbühne 2 ist jede für eine bekannte, exakte Parallelverschiebung in einer Richtung geeignete, schritt- oder abschnittweise antreibbare mechanische oder mechanisch-elektrische Verschiebevorrichtung verwendbar. Beim gezeigten Ausführungsbeispiel sind an der Bühnenrückseite mehrere Arme 2c mit exakten Bohrungen vorgesehen, die an wenigstens zwei parallelen Stangen, von denen nur eine Stange 7 sichtbar ist, vertikal verschiebbar sind. Ein Zahnriemenantrieb 8 oder Seilzug ist über zwei Rollen 9, 10 mittels eines Elektromotors 11 von einer Steuerschaltung 12 aus um bestimmte Wegstrecken antreibbar und an einer Stelle 8a mit der Filmbühne 2 verbunden, so dass bei Bewegung des Zahnriemens oder Seilzugs 8 die Filmbühne 2 um entsprechende Stücke aufwärts bzw. abwärts in Richtung Z mitgenommen wird. Die entsprechenden Wegstrecken richten sich nach der an einer Wähltastatur 13 vorgewählten Funktion, wobei beispielsweise bei einer Einteilung und Grösse der aufzunehmenden Bilder gemäss Fig. 3a die Filmbühne 2 in Z-Richtung je Spalte sechs gleiche Schritte, z.B. zuerst nach aufwärts für die erste Aufnahmespalte und dann wieder nach abwärts für die zweite Aufnahmespalte und wieder nach aufwärts für die dritte Aufnahmespalte und wieder nach abwärts für die vierte Aufnahmespalte ausführt. Bei entsprechend anders aufgeteilten, vorwählbaren Aufnahmefeldeinteilungen, z.B. nach den Fig. 3b bis 3h sind die Schritte der Filmbühne 2 in Z-Richtung entsprechend anders programmiert. Die Bühne 2 führt dabei nur eine Auf- oder Abwärtsbewegung in Z-Richtung durch.

Um nun Aufnahmen auf dem Film nicht nur in vertikalen Spalten, sondern auch in horizontalen Reihen, also in X-Richtung nebeneinander und ausserdem in verschiedenen Grössen aufnehmen zu können, ist ein Monitor 14, dessen Bildschirm 14a abfotografiert werden soll, in den beiden zur Verschieberichtung Z der Filmbühne 2 senkrechten Richtungen X und Y verschiebbar gelagert. Der Bildschirm 14a könnte dabei parallel zur Filmbühne 2 und zwischen beiden könnte einstellbar ein Aufnahmeobjektiv 15 angeordnet sein. Gemäss dem gezeigten Ausführungsbeispiel liegt jedoch der abzufotografierende Bildschirm 14a horizontal nach oben gerichtet in der X-Y-Ebene. Der Monitor 14 ist dabei an in Y-Richtung verlaufenden parallelen Trägerststangen 16 eines Rahmens 17 mit nicht näher gezeigten Bohrungen verschiebbar, und zwar mittels einer über einen zweiten Elektromotor 18 angetriebenen Spindel 19. An den Führungsstangen 16 ist auch das Objektiv 15 mittels einer weiteren Spindel 20 verschiebbar geführt. Die weitere Spindel 20 ist durch einen dritten Elektromotor 21 antreibbar. Die Steuerung der einer gewählten oder programmierten Vergrösserung bzw. Verkleinerung einer Bildschirmaufnahme entsprechende Lage von Objektiv 15 und Bildschirm 14a in Y-Richtung erfolgt wiederum über die Steuerschaltung 12 entsprechend dem in der Wahltastatur 13 ausgewählten Programm. Die Führungsstangen 16 mit den Trägern 17 und 22 für Monitor 14 und Objektiv 15 sind an einer zur Filmbühne 2 parallelen, ein Belichtungsfenster oder eine Bildfeldblende 23a aufweisenden Hauptträgerplatte 23 gehalten, die ihrerseits an in X-Richtung verlaufenden, im Gehäuse 1 befestigten Führungsstangen 24 in X-Richtung verschiebbar gelagert und durch eine dritte Spindel 25 mittels eines vierten Elektromotors 26 schrittweise von Bild zu Bild jeder Bildzeile verschiebbar ist. Auch dieser vierte Elektromotor 26 wird durch die Steuerschaltung 12 entsprechend einem geplanten Programm gesteuert.

Die Einstellung einer Vergrösserung bzw. Verkleinerung der abzufotografierenden Bildschirmbilder erfolgt also durch entsprechende Verschiebung von Objektiv 15 und Bildschirm 14a in Y-Richtung, das Aufnehmen der Bilder in einer vertikalen Spalte durch Verschieben der Filmbühne 2 in Z-Richtung bei stillstehendem Bildschirm 14a und das Aufnehmen der Bilder in einer horizontalen Spalte durch Verschieben des Bildschirms 14a zusammen mit dem Objektiv 15 in X-Richtung bei stillstehender Filmbühne 2.

Nachdem gemäss dem gezeigten Ausführungsbeispiel der Bildschirm 14a horizontal liegt, muss zwischen Bildschirm 14a und Objektiv 15 ein gegenüber beiden um 45° geneigter Umlenkspiegel 27 zusammenmit dem Bildschirm 14a verschiebbar gelagert sein. Um diesen Spiegel 27 einerseits reinigen zu können und andererseits in eine weitere Stellung schwenken zu können, in der er gemäss Fig. 2 eine um 90° gedrehte Stellung zum Abbilden des Bildschirmbildes durch das Objektiv 28a einer Rollfilmkamera 28 auf deren Filmebene einnimmt, ist der Umlenkspiegel 27 in dem Monitorträgerrahmen 17 um eine Achse 29 schwenkbar gelagert. Die zur Achse 29 parallele, dieser entfernter liegende Kante des Spiegels 27 liegt unter der Wirkung der Schwerkraft in der normalen Stellung für Planfilmaufnahmen auf dem Rand des Monitors 14 oder einem Anschlag auf. An wenigstens einem in einer Y-Z-Ebene liegenden Winkel des Spiegels 27 ist ein in X-Richtung verlaufender Steuerstift 30 angeordnet, der in eine gerätefeste Schlitzkurve 31 eingreift. In ihrem einen Endbereich 31a, in dem der Spiegel 27 am weitesten von der Filmbühne 2 entfernt ist, ist die Schlitzkurve 31 als Kreisbogen um die Drehachse 29 ausgebildet, so dass der Spiegel 27 aus der Stellung nach Fig. 1 entgegen dem Uhrzeigersinn durch einen angedeuteten, verschliessbaren Deckel des Gehäuses nach oben zu Reinigungszwecken von Hand schwenkbar ist. An ihrem filmbühnennahen Ende weist die Schlitzkurve 31 ein kleines Kurvenstück 31b auf, das so geformt ist, dass der Spiegel 27 beim Weiterbewegen des Monitors 14 über dessen Endstellung für Planfilmaufnahmen hinaus in die in Fig. 2 gezeigte, um 90° entgegen dem Uhrzeigersinn nach oben geneigte Stellung bis zu einem Anschlag 32 hochgeschwenkt wird. In dieser in Fig. 2 gezeigten Stellung wird das Bildschirmbild des Monitors 14 dann in das Objektiv 28a der Rollfilmkamera 28 geworfen. Diese ist ebenfalls durch den oder einen weiteren Gehäusedeckel zugänglich und auf diese Weise oder mittels einer Fernbedienungsvorrichtung bedienbar. Sie ist auf irgend eine bekannte Weise im Gerät 1 bzw. im Aufnahmeraum 1a lösbar befestigt.

Es bedarf wohl kaum einer Erwähnung, dass zwischen Planfilmbühne 2, Objektiv 15 und dem Trägerrahmen 17 für den Monitor lichtdichte Balgen 33 vorgesehen sind. Ist der Bildschirm 14a parallel zur Filmbühne 2 angeordnet, so ist zwar die Monitoranordnung u.U. geringfügig einfacher; dagegen wird in diesem Fall das Einschwenken eines Umlenkspiegels für Rollfilmaufnahmen erheblich schwieriger, da dann entweder keine Balgen vorgesehen werden oder diese zum Einschwenken eines oder mehrerer Umlenkspiegel vorübergehend abgekoppelt und zusammengeschoben werden müssen. Soll dabei die Kamera 28 noch gut zugänglich sein, so müssten zwei zueinander geneigte Umlenkspiegel für die Herstellung von Rollfilmaufnahmen einschwenkbar sein. An die Stelle einer Rollfilmstehbildkamera könnte bei Bedarf naturgemäss auch eine Kinokamera treten. An die Stelle des gezeigten Riementriebs 8 bzw. der Spindeltriebe 19, 20, 25 könnten je nach Zweckmässigkeit auch andere im Objektivbau bekannte Antriebe, wie Schneckengänge oder Zahnrad- und Zahnstangentriebe, treten.

**Patentansprüche**

1. Vorrichtung zur Herstellung fotografischer Aufnahmen von auf einem Bildschirm (14a) eines Monitors (14) erscheinenden Röntgen- oder Ultraschall- oder dergleichen Bildern, wobei ein Objektiv (15) zwischen dem Bildschirm (14a) und einer einen Film in Belichtungsstellung haltenden Filmbühne (2) zur scharfen Abbildung des Bildschirmbildes auf den Film angeordnet ist, wobei die Filmbühne (2) in einer Koordinatenrichtung (Z) hin- und herverschiebbar gelagert und mit Antriebsmitteln (8 bis 11) für die Verschiebebewegung gekoppelt ist, wobei Filmtransportmittel zum Be- und Entladen der Filmbühne (2) vorgesehen sind, wobei vorzugsweise der Bildschirm (14a) und das Objektiv (15) schritt- oder stufenweise in der zur Verschieberichtung (Z) der Filmbühne und zur Objektivachse (Y) senkrechten Koordinatenrichtung (X) einstellbar bzw. antreibbar angeordnet sind und wobei die Filmbühne (2) als Blattfilmbühne ausgebildet ist, dadurch gekennzeichnet, dass die Filmbühne (2) über ihre für Aufnahmen geeigneten Stellungen hinaus in eine Be- und Entladestellung verschiebbar ist, dass im Bereich der Be- und Entladestellung für die Filmbühne (2) ein sowohl der Be- als auch der Entladung dienendes Transportwalzenpaar (3a, 3b) vorgesehen ist, das durch mehrere voneinander beabstandete Walzenpaarstücke (3a, 3b) gebildet wird, und dass die den Walzenpaarstücken zugewandte Filmbühnenseite (2a) an den den Walzenpaarstücken (3a, 3b) entsprechenden Stellen Ausnehmungen (2b) aufweist, an denen ein völlig in der Filmbühne (2) und damit auch in den Ausnehmungen (2b) liegender Film durch die Walzenpaarstücke (3a, 3b) erfassbar ist.

2. Vorrichtung nach Anspruch 1, dadurch gekennzeichnet, dass an die Vorrichtung mindestens ein Filmvorratsmagazin (5) und ein Zwischenmagazin (6) für die Aufnahme belichteter Filme und/oder eine Filmentwicklungsmaschine angeschlossen sind, aus dem bzw. zu denen über weitere Transportmittel ein Film dem Transportwalzenpaar (3a, 3b) zuführbar bzw. von ihm abführbar ist.

3. Vorrichtung nach einem der Ansprüche 1 oder 2, dadurch gekennzeichnet, dass eine Auswahleinrichtung (13) für die Zahl der auf einem in der Filmbühne (2) angeordneten Blattfilm anzuordnenden Bildschirmaufnahmen mit einer elektrischen oder elektronischen Steuervorrichtung (12) verbunden ist, durch welche die entsprechenden Bewegungsschritte von Filmbühne (2) in Z-Richtung und/oder Bildschirm (14a) und Objektiv (15) in X-Richtung steuerbar sind, und dass die Filmbühne (2) eine Ansaugvorrichtung (4) für einen in ihr zu haltenden Film aufweist, die bei Erreichen der Be- und Entladestellung der Filmbühne (2) abschaltbar ist.

4. Vorrichtung nach einem der vorhergehenden Ansprüche, dadurch gekennzeichnet, dass die Filmbühne (2) vertikal angeordnet und in vertikaler Richtung (Z-Richtung) verschiebbar ist.

5. Vorrichtung nach Anspruch 3, dadurch gekennzeichnet, dass zwischen dem Bildschirm (14a) und der Filmbühne (2) ein schwenkbarer Umlenkspiegel (27) vorgesehen ist, dass der Umlenkspiegel (27) gemeinsam mit dem Bildschirm (14a) verschiebbar gelagert und in Verschieberichtung (Y) senkrecht zur Filmbühne (2) in seinen beiden Endstellungen für Aufnahmen auf Blattfilm mittels einer Stift-Schlitz-Führung (30, 31) entweder automatisch in eine Stellung für Rollfilmaufnahmen oder von Hand in eine zur Spiegelreinigung geeignete Stellung schwenkbar ist und dass der Schlitz (31) der Stift-Schlitz-Führung (30, 31) in seinem den Aufnahmen auf Blattfilm zugeordneten Bereich durch einen geradlinigen Teil und in den daran anschliessenden Aussenbereichen durch Bogenstücke (31a, 31b) gebildet wird.

**Claims**

1. Apparatus for the production of photographic records of X-ray or ultrasonic or the like images appearing on an image screen (14a) of a monitor (14), in which an object lens (15) is placed between the screen (14a) and a film stage (2) which holds a film in the position for exposure for sharply focusing the image of the screen onto the film, the film stage (2) being mounted to be reciprocatingly displaceable in one co-ordinate direction (Z) and coupled with drive means (8 to 11) for the displacement, film transport means being provided for loading and unloading the film stage (2), the image screen (14a) and the lens (15) being preferably adjustable or drivable stepwise in the co-ordinate direction (X) which is perpendicular to the direction of displacement (Z) of the film stage and to the axis of the object lens (Y), and the film stage (2) being designed as sheet film stage, characterised in that the film stage (2) is displaceable beyond its positions suitable for taking photographs into a loading and unloading position, in that a pair of transport rollers (3a, 3b) serving bot for loading and for unloading is provided in the region of the loading and unloading position for the film stage (2), which pair of transport rollers is formed by a plurality of roller pair elements (3a, 3b) spaced apart, and in that that side of the film stage (2a) which faces the roller pair elements has recesses (2b) in positions corresponding to the roller pair elements (3a, 3b), at which recesses a film lying completely in the film stage (2) and hence also in the recesses (2b) can be gripped by the roller pair elements (3a, 3b).

2. Apparatus according to claim 1, characterised in that at least one film storage magazine (5) and an intermediate magazine for holding exposed films and/or a film developing machine are attached to the apparatus, from which and to which a film may be conveyed to or removed from the pair of transport rollers (3a, 3b) by way of additional transport means.

3. Apparatus according to one of the claims 1 or 2, characterised in that a selector device (13) for the number of image screen photographs to be arranged on a sheet film situated in the film stage (2) is connected to an electric or electronic device (12) by means of which the appropriate steps of movement of the film stage (2) in the Z-direction and/or of the image screen (14a) and lens (15) in the X-direction can be controlled, and in that the film stage (2) has a suction device (4) for a film to be held in the stage, which suction device may be switched off when the loading and unloading position of the film stage (2) is reached.

4. Apparatus according to one of the preceding claims, characterised in that the film stage (2) is arranged vertically and is displaceable in the vertical direction (Z-direction).

5. Apparatus according to claim 3, characterised in that a pivotally mounted deviating mirror (27) is provided between the image screen (14a) and the film stage (2), in that the deviating mirror (27) is mounted to be displaceable together with the screen (14a), and in its two end positions in the direction of displacement (Y) perpendicular to the film stage (2) for taking photographs on sheet film it can be tilted by means of a pin-and-slot guide (30, 31), either automatically into a position for taking photographs on roll film or by hand into a suitable position for cleaning of the mirror, and in that the slot (31) of the pin-and-slot guide (30, 31) comprises a straight part in the region thereof provided for the taking of photographs on sheet film and curved parts (31a, 31b) in the adjacent, outer regions.

## Revendications

1. Appareil pour la réalisation de reproductions photographiques de radiographies, d'images par ultrasons ou analogues apparaissant sur un écran (14a) d'un moniteur (14), un objectif (15) étant placé entre l'écran (14a) et un porte-film (2) maintenant un film en position d'exposition pour la représentation nette de l'image de l'écran sur le film, le porte-film (2) étant logé en étant déplaçable en va-et-vient dans une direction de coordonnées (Z) et couplé avec des moyens d'entraînement (8 à 11) pour le mouvement de translation, des moyens de transport de film étant prévus pour le chargement et le déchargement du porte-film (2), l'écran (14a) et l'objectif (15) étant de préférence placés en étant réglables et commandables progressivement ou graduellement dans la direction de coordonnées (X) perpendiculaire à la direction de translation (Z) du porte-film et à l'axe (Y) de l'objectif et le porte-film (2) étant réalisé sous la forme d'une feuille, caractérisé en ce que le porte-film (2) est translatable de ses positions appropriées pour les reproductions à une position de chargement ou de déchargement, en ce que, dans la zone de la position de chargement ou de déchargement du porte-film (2), est prévu un couple de rouleaux de transport (3a, 3b) servant aussi bien au chargement qu'au déchargement et qui est formé de plusieurs éléments de couples de rouleaux (3a, 3b) distants les uns des autres et en ce que le côté du porte-film (2) tourné vers les éléments de couples de rouleaux présente, aux emplacements correspondant aux éléments de couples de rouleaux (3a, 3b), des évidements (2b) dans lesquels un film se trouvant entièrement dans le porte-film (2) et donc également dans les évidements (2b) peut être saisi par les éléments de couples de rouleaux (3a, 3b).

2. Appareil selon la revendication 1, caractérisé en ce que lui sont raccordés au minimum un magasin (5) de réserve de film et un magasin (6) intermédiaire pour recevoir les films exposés et/ou une machine de développement de film, duquel ou auxquels, par l'intermédiaire d'autres moyens de transport, un film est amené à la partie de rouleaux de transport (3a, 3b) ou emmené par elle.

3. Appareil selon l'une des revendications 1 ou 2, caractérisé en ce qu'un dispositif de sélection (13), pour le choix des images de l'écran à disposer sur un film en feuille installé dans le porte-film (2), est relié à un dispositif de commande (12) électrique ou électronique, au moyen duquel pouvant être commandés les pas de mouvement correspondants du porte-film (2) dans la direction (Z) et/ou de l'écran (14a) et de l'objectif (15) dans la direction (X), et en ce que le porte-film (2) présente, pour un film qu'il doit maintenir, un dispositif d'aspiration (4) qui est déconnectable lors du chargement ou du déchargement du porte-film (2).

4. Appareil selon l'une des revendications précédentes, caractérisé en ce que le porte-film (2) est disposé verticalement et est déplaçable en direction verticale (direction Z).

5. Dispositif selon la revendication 3, caractérisé en ce qu'entre l'écran (14a) et le porte-film (2) est prévu un miroir de renvoi orientable (27) en ce que ce miroir (27) est logé en étant translatable en même temps que l'écran (14a) et orientable dans la direction de translation (Y) perpendiculairement au porte-film (2), dans ses deux positions extrêmes pour des reproductions sur film en feuille, au moyen d'un guide à fente de serrage (30, 31) sout automatiquement dans une position pour les reproductions avec film en bobine, soit manuellement dans une position appropriée au nettoyage du miroir et en ce que la fente (31) du guide à fente de serrage (30, 31), dans sa zone correspondant aux reproductions sur film en feuille, est formée d'une partie rectiligne et, dans les zones extérieures qui s'y raccordent, par des secteurs cintrés (31a, 31b).

FIG. 1

FIG. 2

FIG. 3a

FIG. 3b

FIG. 3c

FIG. 3d

FIG. 3e

FIG. 3f

FIG. 3g

FIG. 3h

$X$

$Z$

FIG. 4

$Z$

$X$

3a/3b

3a/3b

2a

2a

2a

2b

2b

2